(19) Europäisches Patentamt
European Patent Office
Office européen des brevets

(11) EP 2 210 762 A2

(12) EUROPEAN PATENT APPLICATION

(43) Date of publication:
28.07.2010 Bulletin 2010/30

(51) Int Cl.:
B60K 26/04 (2006.01)          B60K 26/00 (2006.01)
B62K 11/14 (2006.01)          F02D 11/00 (2006.01)
G01D 5/14 (2006.01)

(21) Application number: 10151013.9

(22) Date of filing: 18.01.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 21.01.2009 US 356680

(71) Applicant: Honeywell International Inc.
Morristown, NJ 07962 (US)

(72) Inventors:
• Reddy, Gangi Rajula
560076, Karnataka (IN)
• Chandran, Anand
Springfield, IL 62711 (US)
• Cable, Al
Springfield, IL 62712 (US)
• Holzmacher, Richard Alan
Springfield, IL 62704 (US)
• Gudi, Ravindra
560010, Bangalore (IN)
• Murali, Deepak
560070, Jayanagar, Bangalore (IN)
• Moonamkandy, Shakil
560076, Karnataka, Bangalore (IN)

(74) Representative: Buckley, Guy Julian
Patent Outsourcing Limited
1 King Street
Bakewell
Derbyshire DE45 1DZ (GB)

(54) **Drive by wire non-contact capacitive throttle control apparatus and method of forming the same**

(57) A drive-by-wire non-contact capacitive throttle control apparatus and method of forming the same. A capacitive position sensor is provided, which includes a stationary electrode and a rotatable electrode. The rotatable electrode can be attached to a throttle lever such that the rotatable electrode rotates as the throttle lever rotates. The capacitance between the rotatable electrode and the stationary electrode varies with the position of the throttle lever. The position of the throttle lever can be measured by measuring the capacitance between the electrodes and a signal can be generated based on the sensed position. The signal can be electrically transmitted to an ECU (Electronic Control Unit) utilizing one or more electrical wires. The signal can be sent in the form of a varying voltage, which in turn controls the throttle of a vehicle.

FIG. 1

EP 2 210 762 A2

**Description**

TECHNICAL FIELD

Embodiments are generally related to non-contact throttle control devices. Embodiments are also related to capacitive position sensors. Embodiments are additionally related to throttle control components utilized in automotive applications such as off-road vehicles, all terrain vehicles, motorcycles, snowmobiles, and so forth.

BACKGROUND OF THE INVENTION

A throttle controls the flow of air, or air and fuel, which are inducted into an internal combustion engine to control the power produced by the engine. Engine power defines the speed of the engine or vehicle to which it is attached, under a particular load condition, and thus, reliable control of the throttle setting is important. Vehicles are known for utilizing throttle controls that are mechanical and electrical in nature. For example, off-road vehicles such as, for example, an ATV (All Terrain Vehicle) or a snowmobile operates with a small gasoline powered engine. To operate such engines, the operator activates a throttle lever or twist grip mounted on a handlebar that controls the engine throttle.

The thumb lever or throttle is usually mounted to and/or integrated with the right handlebar in order to control engine throttle. As the rider grips this handlebar, the rider's thumb operates the throttle by pushing the throttle against the handle bar and holding it in place. The throttle is designed to provide a range of speeds as the throttle is depressed. If the throttle is held fully open, the highest speeds can be attained. However, holding the throttle in between "off" and "full" produces an intermediate level of speed. To prevent the throttle from "sticking" in the open position, a spring is typically utilized to force the throttle back to the off position if the throttle is released.

In the majority of prior art systems, a direct mechanical linkage controls the throttle, typically in the form of a cable running from the throttle lever or twist grip to a throttle mechanism associated with the engine. Such throttle actuation is mechanical and hence, the cable is subject to a great deal of wear and tear. Although mechanical linkages are simple and intuitive, such components cannot readily be adapted to electronically control an engine such as may be desired with sophisticated emissions reduction systems or for other features such as, for example, automatic vehicle speed control. The cable also tends to get stuck in adverse weather conditions such as, for example, snow, ice accumulation, driving on a dirt road, etc. Further, frequent servicing and monitoring of the throttle mechanism is required to maintain it in a proper working condition. Hence, it is believed that a solution to these problems involves the implementation of an improved drive by wire, non-contact throttle control apparatus associated with a capacitive position sensor, which is described in greater detail herein.

BRIEF SUMMARY

The following summary is provided to facilitate an understanding of some of the innovative features unique to the embodiments disclosed and is not intended to be a full description. A full appreciation of the various aspects of the embodiments can be gained by taking the entire specification, claims, drawings, and abstract as a whole.

It is, therefore, one aspect of the present invention to provide for an improved capacitive position sensor for use with a throttle control mechanism.

It is another aspect of the present invention to provide for an improved drive by wire non-contact capacitive throttle control apparatus.

The aforementioned aspects and other objectives and advantages can now be achieved as described herein. A drive by wire non-contact capacitive throttle control apparatus and a method of forming the same are disclosed. Such an approach includes the use of a capacitive position sensor including a stationary electrode and a rotatable electrode. The rotatable electrode can be attached to a throttle lever such that the rotatable electrode rotates as the throttle lever rotates. The capacitance between the rotatable electrode and the stationary electrode changes with the position of the throttle lever. The position of the throttle lever can be measured by measuring the capacitance between the electrodes and a signal can be generated based on the sensed position. The signal can be electrically transmitted to an ECU (Electronic Control Unit) utilizing electrical wires in the form of a varying voltage, which in turn controls the throttle of a vehicle.

The drive by wire non-contact capacitive throttle control apparatus can be utilized as throttle control in off road vehicles, thereby eliminating the need for throttle cables and other mechanical parts such as is presently utilized in, for example, ATV's and snowmobiles. The apparatus can be customized to any type of rotary sensor that possesses similar applications of an automobile throttle lever. Such a sensing technology is not subject to wear and tear and the life cycle of the throttle control apparatus can be increased tremendously, which also does not require regular maintenance.

BRIEF DESCRIPTION OF THE DRAWINGS

The accompanying figures, in which like reference numerals refer to identical or functionally-similar elements throughout the separate views and which are incorporated in and form a part of the specification, further illustrate the embodiments and, together with the detailed description, serve to explain the embodiments disclosed herein.

FIG. 1 illustrates a perspective three dimensional view of a non-contact capacitive throttle control apparatus, which can be implemented in accordance with a preferred embodiment;

FIG. 2 illustrates an exploded view of the non-contact capacitive throttle control apparatus with a stationary electrode and a rotatable electrode, which can be implemented in accordance with a preferred embodiment;

FIGS. 3-6 illustrates a perspective view of a thumb lever at '0' degree, '10' degree, '40' degree and '80' degree rotation respectively, which can be implemented in accordance with a preferred embodiment;

FIG. 7 illustrates a high level flow chart of operations illustrating logical operational steps of a method for determining the position of the throttle lever, which can be implemented in accordance with a preferred embodiment;

FIG. 8 illustrates a schematic view of the stationary electrode and the rotatable electrode illustrating angular deviations, which can be implemented in accordance with a preferred embodiment; and

FIG. 9 illustrates an exemplary graphical representation illustrating capacitance between the electrodes of the throttle control apparatus, which can be implemented in accordance with a preferred embodiment.

DETAILED DESCRIPTION

The particular values and configurations discussed in these non-limiting examples can be varied and are cited merely to illustrate at least one embodiment and are not intended to limit the scope thereof.

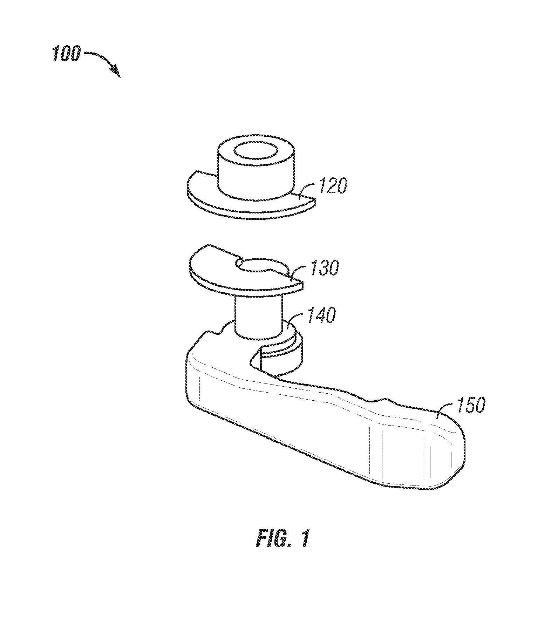

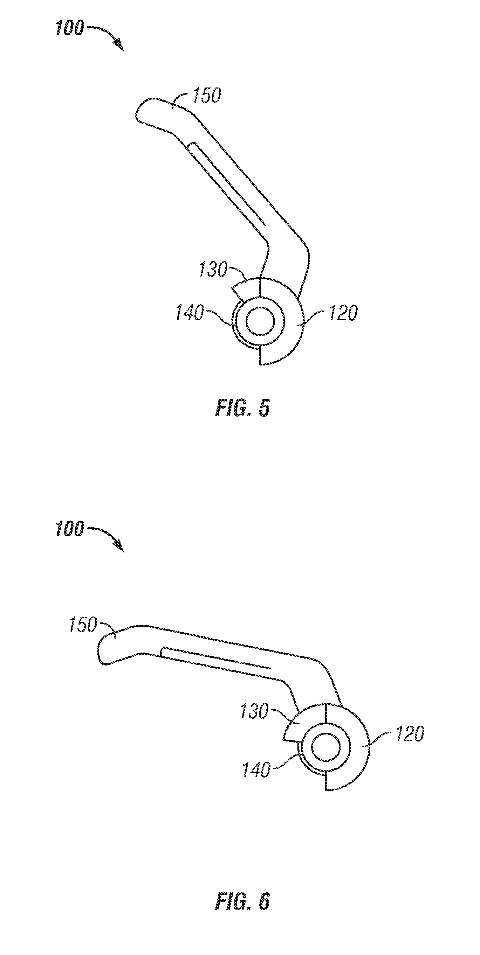

FIG. 1 illustrates a perspective three-dimensional view of a non-contact capacitive throttle control apparatus 100, which can be implemented in accordance with a preferred embodiment. Note that in FIGS. 1-9, identical or similar parts or elements are generally indicated by identical reference numerals. Preferably, the non-contact capacitive throttle control apparatus 100 includes a pair of electrodes 120 and 130 mounted thereon for position sensing. The non-contact capacitive throttle control apparatus 100 generally includes a throttle lever 140 associated with a handle 150. The throttle lever 140 associated with the handle 150 has a long, extended portion. The length of the handle 150 can be adjusted as well, depending on the preferences of different riders.

The throttle lever 140 can be mounted on the handle bar 150 utilizing a torsion spring (not shown), which controls throttle of the engine. The non-contact capacitive throttle control apparatus 100 further includes a rotatable electrode 130 that can be mounted on the throttle lever 140. The throttle lever 140 rotates corresponding to the opening of a throttle valve (not shown) and is further provided with a stationary electrode 120. The stationary electrode 120 and the rotatable electrode 130 are preferably configured from, for example, copper or aluminum. It can be appreciated, of course, that other types of film may be utilized in place of the copper or aluminum, depending upon design considerations. The rotatable electrode 130 can be attached to the throttle lever 140 and it can rotate with the throttle lever 140. The capacitance between the rotatable electrode 130 and the stationary electrode 120 changes with the position of the throttle lever 140.

The position of the throttle lever 140 can be measured by measuring the capacitance between the two electrodes 120 and 130 and a signal can be generated based on the sensed position. In general, capacitance can be a measure of the amount of electric charge stored (or separated) for a given electric potential between two electrodes such as the stationary electrode 120 and the rotatable electrode 130. By measuring the capacitance between the electrodes 120 and 130, the position of the throttle control lever 140 can be measured simultaneously. Note that the throttle control apparatus as a non-contact capacitive sensor can eliminate the need of cables and other mechanical parts that are traditionally utilized in off-road vehicles.

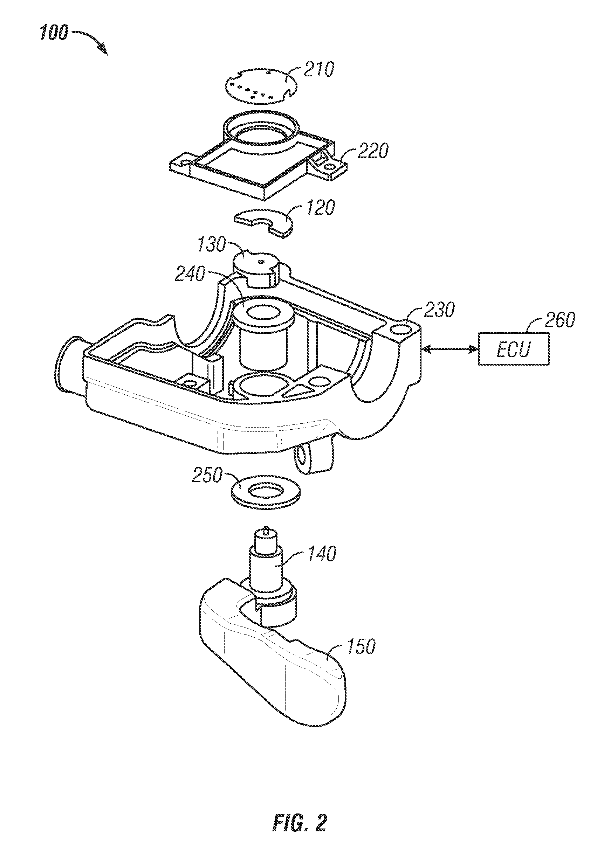

FIG. 2 illustrates an exploded view of the non-contact capacitive throttle control apparatus 100, which can be implemented in accordance with a preferred embodiment. The drive-by-wire throttle control apparatus 100 typically includes the throttle lever 140, a PCB 210 associated with a PCB housing 220. Drive-by-wire technology in the automotive industry replaces the traditional mechanical and hydraulic control systems with electronic control systems. The PCB 210 can be utilized to mechanically support and electrically connect electronic components such as the electrodes 120 and 130 utilizing conductive pathways, or traces, etched from copper sheets laminated onto a non-conductive substrate.

A sensed member can be provided, which is preferably the rotatable electrode 130 and the stationary electrode 120 associated with the throttle lever 140. Preferably, the rotatable electrode 130 and the stationary electrode 120 can be configured to sense the position of the throttle lever 140. In a preferred embodiment, the stationary electrode 120 can be mounted to a mounting bracket 230 and is stationary with respect to the throttle lever 140. The extended portion of the handle 150 terminates at the mounting bracket 230. The mounting bracket 230 is preferably operably designed and configured to mount the throttle lever 140 to the handle bar 150. The throttle lever 140 is preferably received within the mounting bracket 230 and preferably coaxial therewith, although the throttle lever 140 can be received in other positions and/or orientations. The preferred throttle lever 140 is a twist throttle, which receives the handle bar 150 for rotation thereabout.

The mounting bracket 230 comprises a curved body, as depicted in FIG. 2. In a preferred embodiment, the throttle lever 140 can be molded in one piece from a plastic or another similar material, depending upon design considerations. Of course, the throttle lever 140 can be configured from other materials as well such as, for example, metal. Note that the embodiments discussed herein should not be construed in any limited sense. It can be appreciated that such embodiments reveal details of the structure of a preferred form necessary for a better understanding of the invention and may be subject to change by skilled persons within the scope of the invention without departing from the concept thereof.

A collar 240 is positioned on the outer periphery of the throttle lever 140 for rotation therewith, the collar 240 having a gripping surface formed around the outer periphery thereof. The collar 240 can be non-rotatably mounted on the throttle lever 140 for engaging and selectively holding the gripping surface and hand grip at any desired throttle setting. A lock washer 250 can be configured for locking the rotatable electrode 120 and the throttle lever 140 in a predetermined position. The electrodes 120 and 130 of the throttle control apparatus 100 can act as a capacitive sensor that can eliminate the need for throttle cable in the off-road vehicles. As the throttle lever 140 rotates, the rotatable electrode 130 can also rotate. This results in a change in the capacitance between the electrodes 120 and 130.

The measured change in the capacitance between the electrodes 120 and 130 can be utilized to measure the position of the throttle lever 140 and a respective signal based on the sensed position can be generated. The signal in turn can be sent to an Electronic Control Unit (ECU) 260 which is converted to a voltage value that is used to control the throttle of a vehicle. The ECU 260 determines the required throttle position by calculations from data measured by other sensors such as an accelerator pedal position sensor, engine speed sensor, vehicle speed sensor, etc. The drive-by-wire technology eliminates the need for a throttle cable such as in ATV's and snowmobiles.

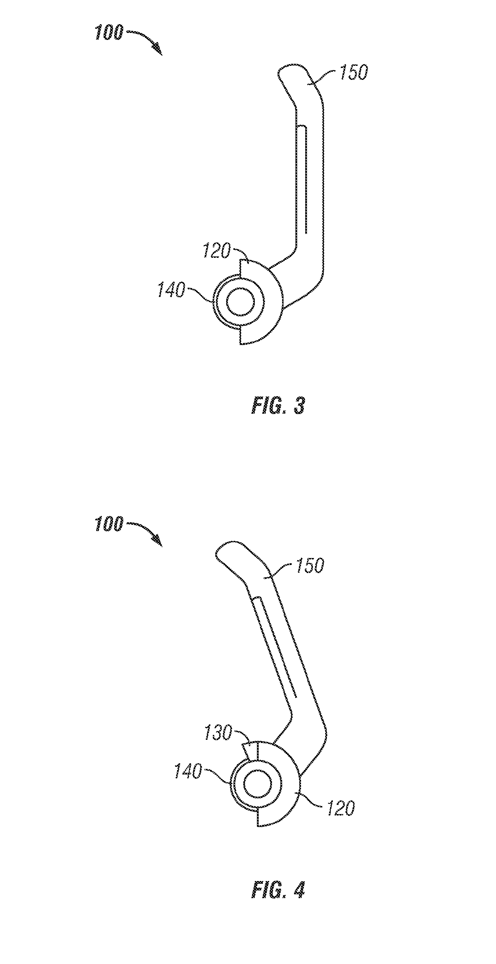

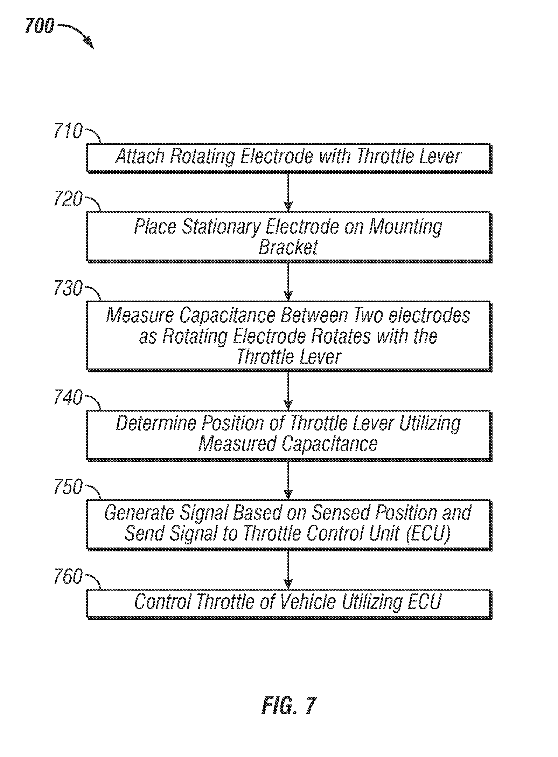

FIGS. 3-6 illustrates a perspective view of a thumb lever at '0' degree, '10' degree, '40' degree and '80' degree rotation with respect to the rotatable electrode 130 respectively, which can be implemented in accordance with a preferred embodiment. FIG. 7 illustrates a high-level flow chart of operations illustrating logical operational steps of a method 700 for determining the position of the throttle lever 140 utilizing non-contact capacitive throttle control apparatus 100, which can be implemented in accordance with a preferred embodiment. The rotatable electrode 130 can be attached to the throttle lever 140 via the collar 240, as illustrated at block 710.

The stationary electrode 120 can be mounted to a mounting bracket 230, as depicted at block 720. Further, the capacitance between the electrodes 120 and 130 can be measured as the rotatable electrode 130 rotates with the throttle lever 140, as illustrated at block 730. The position of the throttle lever 140 can be determined utilizing the measured capacitance between the electrodes 120 and 130, as illustrated at block 740. Thereafter, as depicted at block 750, a signal can be generated based on the sensed position and the signal can be sent to the ECU 260. The ECU 260 can be utilized to control the throttle of the vehicle, as illustrated at block 760.

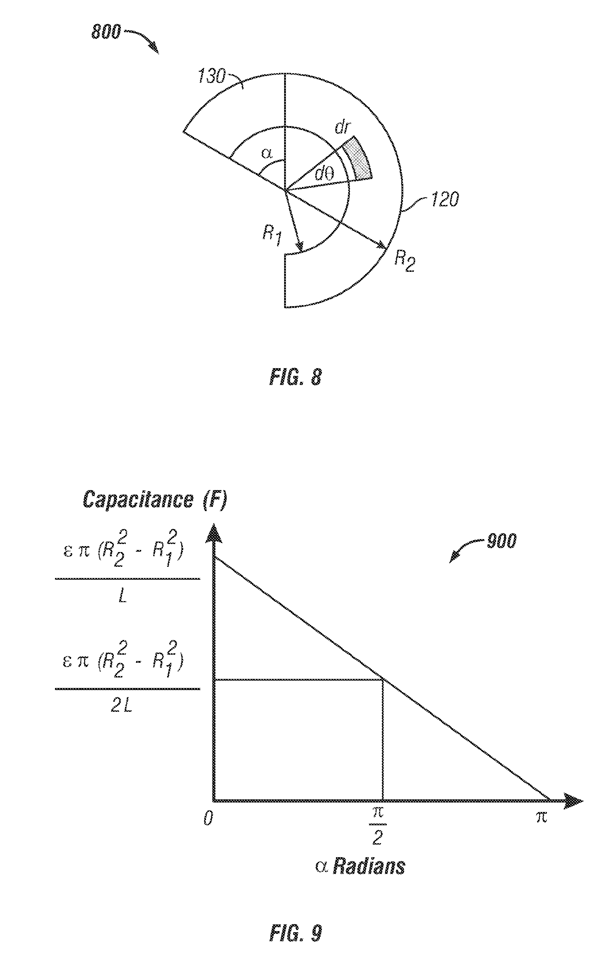

FIG. 8 illustrates a schematic view 800 of the stationary electrode 120 and the rotatable electrode 130 illustrating angular deviations, which can be implemented in accordance with a preferred embodiment. The capacitance C can be defined as the charge per unit voltage, as indicated in equation (1) as follows.

$$C = Q/V \qquad\qquad (1)$$

The effective area of the stationary electrode 120 and the rotatable electrode 130 can be calculated as shown in the equation (2):

$$\text{Effective area of plate} = \left[ \int_{R_1}^{R_2} r\, dr \cdot \int_0^{(\pi - \alpha)} d\theta \right]$$

$$= \left[ \frac{R_2^2}{2} - \frac{R_1^2}{2} \right] \cdot \left[ \pi - \alpha \right] \qquad (2)$$

wherein $R_1$ represents internal radius and $R_2$ represents external radius of the electrodes 120 and 130 and $\alpha$ represents the rotational angle between the electrodes 120 and 130, in radians. The electrical field between the electrodes 120 and 130 of the throttle control apparatus 100 can be expressed utilizing Gauss Law as follows:

$$2\left[ \oint \vec{D} \cdot d\vec{S} \right] = Q$$

$$2(D) \left[ \frac{R_2^2}{2} - \frac{R_1^2}{2} \right] \cdot \left[ \pi - \alpha \right] = Q$$

$$2(\varepsilon E) \left[ \frac{R_2^2}{2} - \frac{R_1^2}{2} \right] \cdot \left[ \pi - \alpha \right] = Q \qquad (3)$$

wherein the variable D represents electric flux density, the variable E represents electric field intensity and the variable Q represents the electric charge at the electrodes 120 and 130, respectively. The electric field between the electrodes 120 and 130 can be calculated generally by the following equation (4).

$$(E) = \frac{Q}{\varepsilon(\pi - \alpha)(R_2^2 - R_1^2)} \qquad (4)$$

The potential difference between the electrodes 120 and 130 can be computed by equation (5) below.

$$(V) = \oint \vec{E} \cdot d\vec{l}$$

$$= \frac{Q \cdot L}{\varepsilon(\pi - \alpha)(R_2^2 - R_1^2)} \qquad (5)$$

FIG. 9 illustrates an exemplary graphical representation 900 illustrating mathematical calculation of capacitance between the electrodes 120 and 130, which can be implemented in accordance with a preferred embodiment. The capacitance between the electrodes can be mathematically calculated as shown in the equation (6).

$$(C) = \frac{Q}{V}$$

$$= \frac{\varepsilon(\pi - \alpha)(R_2^2 - R_1^2)}{L} \qquad (6)$$

For example, the graphical representation 900 illustrates the capacitance between the electrodes 120 and 130 at $\Pi$ radians and $\Pi/2$ radians respectively. The measured change in the capacitance between the electrodes 120 and 130 can be utilized to measure the position of the throttle lever 140. Such a sensing technology does not possess wear and tear and the life cycle of the throttle control apparatus 100 can be increased tremendously, which does not require regular maintenance. The ECU 260 determines the required throttle position by calculations from data measured by other sensors such as an accelerator pedal position sensor, engine speed sensor, vehicle speed sensor, etc. The non-contact capacitive throttle control apparatus 100 can be utilized as throttle control in off-road vehicles eliminating the need of cables and other mechanical parts that is used traditionally.

It will be appreciated that variations of the above-disclosed and other features and functions, or alternatives thereof, may be desirably combined into many other different systems or applications. Also, that various presently unforeseen or unanticipated alternatives, modifications, variations or improvements therein may be subsequently made by those skilled in the art which are also intended to be encompassed by the following claims.

**Claims**

1. A drive-by-wire non-contact capacitive throttle control apparatus, comprising:

     a mounting bracket;
     a throttle lever rotationally mounted on the mounting bracket;
     a rotatable electrode coupled to, and rotatable with, the throttle lever; and
     a stationary electrode coupled to the mounting bracket and spaced apart from the rotatable electrode to form a capacitor having a capacitance that varies with throttle lever rotation.

2. The apparatus of claim 1 further comprising an electronic control unit coupled to the capacitor and operable to determine the capacitance thereof.

3. The apparatus of claim 2 wherein said electronic control unit is further operable to generate a signal based in part on the determined capacitance.

4. The apparatus of claim 3, wherein the signal that the electronic control unit generates is representative of an engine throttle position.

5. The apparatus of claim 1 further comprising:

a printed circuit board housing coupled to the mounting bracket; and
a printed circuit board disposed within the printed circuit board housing and electrically coupled to the capacitor.

6. The apparatus of claim 1 further comprising:

a collar surrounding a portion of the throttle lever and disposed at least partially within the mounting bracket, the collar rotatable with the throttle lever.

FIG. 1

**FIG. 2**

100

150

120

140

**FIG. 3**

100

150

130

140

120

**FIG. 4**

FIG. 5

FIG. 6

700

710 — Attach Rotating Electrode with Throttle Lever

720 — Place Stationary Electrode on Mounting Bracket

730 — Measure Capacitance Between Two electrodes as Rotating Electrode Rotates with the Throttle Lever

740 — Determine Position of Throttle Lever Utilizing Measured Capacitance

750 — Generate Signal Based on Sensed Position and Send Signal to Throttle Control Unit (ECU)

760 — Control Throttle of Vehicle Utilizing ECU

*FIG. 7*

*FIG. 8*

*FIG. 9*